# FASCICULE DE BREVET EUROPEEN

(11) **EP 0 589 739 B1**
(45) Date de publication et mention de la délivrance du brevet: **13.11.1996**
(21) Numéro de dépôt: 93402117.1
(22) Date de dépôt: 30.08.1993
(51) Int. Cl.: B60Q 1/04, F16B 5/02

(54) **Dispositif réglable de fixation par une liaison filetée**
Einstellbare Befestigungsvorrichtung für eine Gewindeverbindung
Adjustable fixing device for a threaded connection

(30) Priorité: 24.09.1992 FR 9211410
(43) Date de publication de la demande: 30.03.1994
(73) Titulaire: AUTOMOBILES PEUGEOT, 75116 Paris (FR); AUTOMOBILES CITROEN, 92200 Neuilly-sur-Seine (FR)
(72) Inventeur: Jamilloux, Olivier, F-78540 Vernouillet (FR)
(74) Mandataire: Moncheny, Michel

(56) Documents cités:
- EP-A- 0 239 440
- EP-A- 0 451 478

## Description

La présente invention concerne un dispositif de fixation par une liaison filetée d'une pièce sur un support.

Elle concerne plus particulièrement un dispositif de fixation du type comportant une vis de serrage qui traverse une patte de fixation reliée à la pièce et dont le corps fileté est vissé dans un taraudage lié au support.

L'invention concerne plus particulièrement un dispositif de fixation comportant des moyens de réglage de la position axiale de la pièce par rapport au support et trouve notamment à s'appliquer dans tous les cas où l'on désire réaliser un positionnement axial précis de la pièce par rapport au support, et plus particulièrement par rapport à un plan de référence perpendiculaire à la direction de serrage.

Un tel dispositif peut notamment être utilisé pour réaliser le montage d'un projecteur sur la partie avant de la caisse d'un véhicule automobile afin de le positionner précisément par rapport à la face avant du véhicule.

La face avant est une pièce de forme complexe qui est située immédiatement derrière la calandre de la carrosserie et qui supporte différents équipements du véhicule tels que par exemple les ventilateurs de refroidissement et les différents moyens d'éclairage.

Les projecteurs y sont généralement fixés par des pattes transversales de fixation.

Afin d'assurer une continuité la plus précise possible entre les différents éléments de la carrosserie et la face avant des projecteurs, il est nécessaire que ceux-ci soient parfaitement positionnés axialement par rapport aux autres pièces de la carrosserie telles que notamment le pare-chocs et le capot.

Dans le cas du montage d'un projecteur automobile, ce positionnement précis est en outre particulièrement important car il correspond également à un réglage optimal du faisceau d'éclairage.

Dans les dispositifs connus tels que par exemple ceux décrits et représentés dans le document EP-A-0 459 187, les pattes de fixation de chacun des projecteurs sont des pièces réalisées, par exemple par moulage en matière plastique, avec l'ensemble du boîtier du projecteur et les cotes dimensionnelles de ces pattes présentent d'importantes dispersions résultant de leur fabrication en grande série.

EP-A-0 239 440 décrit un dispositif de fixation par une liaison filetée d'une pièce sur un support, du type comportant une patte de fixation reliée à la pièce montée mobile en translation par rapport à la pièce parallèlement à la direction de serrage, traversée par une vis de serrage vissée dans un taraudage lié au support et munie de moyens d'immobilisation en translation par rapport à la pièce lorsque la vis de serrage est en position serrée.

L'invention a pour but de proposer un dispositif de fixation qui permet de réaliser de manière économique et automatisée un positionnement précis, notamment d'un projecteur de véhicule automobile, par rapport à une surface de référence déterminée.

Dans ce but, l'invention propose un dispositif de fixation par une liaison filetée d'une pièce sur un support, du type précité, caractérisé en ce que ladite patte de fixation comporte un talon de guidage en translation reçu dans une glissière qui est formée sur la pièce et qui comporte une fente, ménagée dans une paroi de cette glissière, pour le passage et le coulissement de la patte de fixation, et en ce que la vis de serrage comporte une douille d'entraînement de la patte de fixation qui coopère avec ladite face de cette dernière et dont le diamètre est inférieur à celui du trou formé dans l'organe bombé pour le passage du corps de la vis.

Selon d'autres caractéristiques de l'invention :
- les moyens d'immobilisation de la patte de fixation sont constitués par un organe bombé compressible prenant appui contre une face de ladite patte et traversé par la vis de serrage, dont le bord supérieur comportant au moins une griffe s'étend à l'intérieur de la glissière en vis-à-vis de la face de la cloison de la pièce avec laquelle coopère, à l'état comprimé de l'organe bombé, la griffe et dont le bord inférieur prend appui sur un rebord formé à l'extrémité libre de la patte de fixation;
- la douille est compressible radialement pour permettre sa pénétration, lors du serrage, dans l'orifice formé dans la patte de fixation pour le passage du corps de la vis.

D'autres caractéristiques et avantages de l'invention apparaîtront à la lecture de la description détaillée qui va suivre pour la compréhension de laquelle on se reportera au dessin annexé sur lequel :
- la figure 1 est une vue en coupe transversale illustrant de manière schématique l'agencement d'un projecteur de véhicule automobile sur la face avant de la caisse de ce dernier et un exemple de réalisation d'un dispositif réglable de fixation et réalisé conformément aux enseignements de l'invention et illustré en position non serrée ;
- la figure 2 est une vue partielle en coupe selon la ligne 2-2 de la figure 1 ; et
- la figure 3 est une vue similaire à celle de la figure 1 du dispositif réglable de fixation qui est illustré en position réglée et serrée.

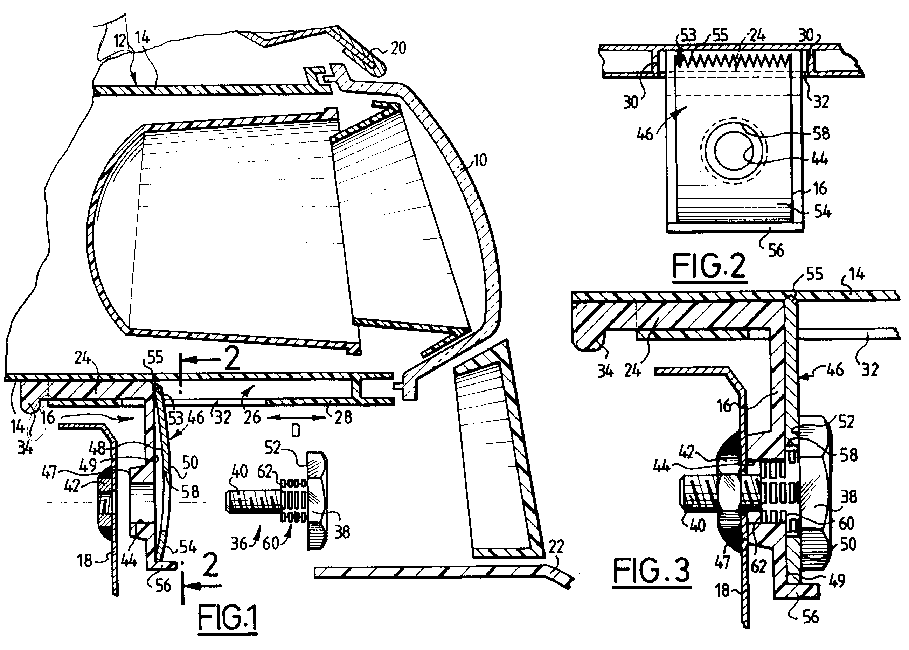

On reconnaît sur la figure 1 la face avant 10 d'un projecteur de véhicule automobile 12 dont le boîtier en matière plastique 14 comporte plusieurs pattes de fixation 16 qui s'étendent transversalement à sa périphérie et dont l'une est illustrée en coupe sur la figure.

Les pattes de fixation 16 permettent le montage du projecteur sur la face avant 18 de la caisse du véhicule automobile.

Compte tenu des dispersions dimensionnelles et géométriques de réalisation par moulage du boîtier du projecteur et d'assemblage de sa face avant, il est nécessaire de pouvoir positionner axialement et de manière précise le projecteur 12 de manière que la face avant 10 présente la meilleure continuité possible par rapport aux éléments de carrosserie du véhicule tels que le capot 20 et le pare-chocs 22.

A cet effet, chaque patte de fixation 16 est montée mobile en translation par rapport au boîtier 14 selon la direction D de réglage.

Chaque patte de réglage 16 s'étend dans un plan transversal perpendiculaire au plan de la figure et à la direction D, et se prolonge à l'une de ses extrémités par un talon de guidage 24 qui est monté coulissant selon la direction D dans une glissière 26 formée sur la face externe du boîtier 14.

La glissière 26 est constituée de la paroi proprement dite du boîtier 14 et d'une paroi parallèle 28 et délimitée latéralement par deux cloisons 30.

La paroi 28 comporte une fente 32 qui permet le passage et le coulissement de la patte de fixation 16.

Les possibilités de coulissement du talon 24 dans la glissière 26, et donc les possibilités de débattement en translation de la patte 16 par rapport au boîtier 14, sont limitées par un bec 34 formé à l'extrémité libre du talon 24.

Le dispositif de fixation comporte également une vis de serrage 36 comportant notamment une tête de serrage 38 à six pans et un corps fileté 40 qui est prévu pour être vissé dans un écrou 42 qui est soudé sur la face avant 18 de la caisse du véhicule.

La patte de fixation 16 comporte un orifice cylindrique 44 d'un diamètre supérieur à celui du corps fileté 40 de la vis.

Conformément à l'invention, la patte de fixation 16 porte un organe 46 dont la fonction est d'immobiliser la patte 16 en translation par rapport au boîtier 14 à l'issue de l'opération de réglage et de serrage.

L'organe 46 assure une fonction de harpon.

A cet effet, il est réalisé sous la forme d'un organe déformable élastiquement et bombé dont la face concave 48 prend appui contre une face en vis-à-vis 49 de la patte de fixation et dont la face convexe 50 est tournée en direction de la face en vis-à-vis 52 de la tête de serrage 38 de la vis 36.

La partie inférieure 54 de l'organe bombé 46 prend appui sur un rebord 56 formé à l'extrémité libre de la patte de fixation 16.

L'organe bombé 46 comporte un trou circulaire 58 dont le diamètre est supérieur à celui de l'orifice cylindrique 44 de la patte de fixation 16.

Enfin, la vis 36 comporte une douille 60, qui est compressible radialement et dont le diamètre initial, à l'état non comprimé illustré à la figure 1, est inférieur au diamètre du trou 58 mais supérieur au diamètre de l'orifice cylindrique 44.

Comme on peut le voir sur la figure 1, le bord supérieur 53 de la pièce bombée 46 s'étend à l'intérieur de la glissière 26 en vis-à-vis de la face extérieure de la cloison du boîtier 14 et il comporte une série de griffes 55 qui, à l'état non comprimé illustré à la figure 1, s'étendent avec jeu en regard de cette surface.

On décrira maintenant le mode d'utilisation du dispositif de fixation réglable qui vient d'être décrit.

Le projecteur 12 est mis en position de manière que sa face avant 10 soit alignée par rapport aux pièces environnantes de la carrosserie.

On procède ensuite au vissage progressif du corps fileté 40 dans l'écrou taraudé 42.

Au cours de ce vissage, qui provoque une translation axiale de la vis 36 par rapport à la face avant 18, vers la gauche en considérant la figure 1, la face d'extrémité 62 de la douille 60 vient en contact avec la face 49 de la patte de fixation 16 et provoque l'entraînement en translation de la patte 16 par rapport au boîtier 14, selon la direction D vers la gauche et en considérant la figure 1.

La translation de la patte 16 se poursuit jusqu'à ce que la face opposée 47 de la patte de fixation 16 vienne en contact avec la face avant 18.

La poursuite de l'opération de vissage provoque alors d'une part la compression radiale de la douille 60 afin que celle-ci pénètre dans l'orifice cylindrique 44 puis, à l'approche de la fin du serrage, la compression axiale de l'organe bombé 46 du fait de la coopération de la face 52 de la tête 38 avec la face 50 de l'organe 46.

Lors de cette compression axiale, l'organe bombé 46 se déforme pour venir occuper la position qui est illustrée à la figure 3 dans laquelle il s'étend sensiblement dans un plan, ce qui a pour effet de provoquer la pénétration des griffes 55 dans le matériau de la cloison périphérique du boîtier 14, et donc l'immobilisation en translation de l'ensemble constitué par la patte 16 et par l'organe formant harpon 46 par rapport au boîtier 14.

L'agencement selon l'invention permet donc de réaliser de manière automatique le réglage de la position du phare 12 et la fixation en position réglée de manière particulièrement simple.

Cet agencement est particulièrement adapté au montage en aveugle et à l'automatisation des opérations, par exemple au moyen d'un robot de vissage des vis 36.

## Revendications

1. Dispositif de fixation par une liaison filetée d'une pièce (12) sur un support (18), du type comportant une patte de fixation (16) reliée à la pièce (12, 14) montée mobile en translation par rapport à la pièce (18) parallèlement à la direction de serrage (D), traversée par une vis de serrage (36) vissée dans un taraudage (42) lié au support (18) et munie de moyens (46) d'immobilisation en translation par rapport à la pièce (14) lorsque la vis de serrage (36) est en position serrée, caractérisé en ce que ladite patte de fixation (16) comporte un talon (24) de guidage en translation reçu dans une glissière (26) qui est formée sur la pièce (12,14) et qui comporte une fente (32), ménagée dans une paroi (28) de cette glissière, pour le passage et le coulissement de la patte de fixation (16), et en ce que la vis de serrage (36) comporte une douille (60) d'entraînement de la patte de fixation (16) qui coopère avec ladite face (49) de cette dernière et dont le diamètre est inférieur à celui du trou (58) formé dans l'organe bombé (46) pour le passage du corps (40) de la vis (36).

2. Dispositif de fixation selon la revendication 1, caractérisé en ce que les moyens d'immobilisation de la patte de fixation (16) sont constitués par un organe bombé compressible (46) prenant appui contre une face (49) de ladite patte et traversé par la vis de serrage (36), dont le bord supérieur (53) comportant au moins une griffe (55) s'étend à l'intérieur de la glissière (26) en vis-à-vis de la face (14) de la cloison de la pièce (12) avec laquelle coopère, à l'état comprimé de l'organe bombé, la griffe (55) et dont le bord inférieur (54) prend appui sur un rebord (56) formé à l'extrémité libre de la patte de fixation.

3. Dispositif de fixation selon la revendication 1 ou 2, caractérisé en ce que la douille (60) est compressible radialement pour permettre sa pénétration, lors du serrage, dans l'orifice (44) formé dans la patte de fixation (16) pour le passage du corps de la vis (36).

## Claims

1. Device for fixing a part (12) to a support (18) by a threaded connection, of the type comprising a fixing lug (16) connected to the part (12, 14), mounted movably for translation relative to the part (12) parallel to the direction of clamping (D), traversed by a clamping screw (36) screwed into a female thread (42) connected to the support (18), and having means (46) for stopping translation relative to the part (14) when the clamping screw (36) is in the clamped position, characterized in that the said fixing lug (16) comprises a translation guide projection (24) housed in a sliding channel (26) formed on the part (12, 14) and including a slot (32) provided in a wall (28) of this sliding channel for the passage and sliding of the fixing lug (16), and in that the clamping screw (36) comprises a sleeve (60) for driving the fixing lug (16), cooperating with the said face (49) of the latter and having a diameter smaller than that of the hole (58) formed in the convex member (46) for the passage of the body (40) of the screw (36).

2. Fixing device according to Claim 1, characterized in that the means for stopping the fixing lug (16) are constituted by a compressible convex member (46) which bears against a face (49) of the said lug and is traversed by the clamping screw (36) and the upper edge (53) of which, including at least one gripper (55), extends into the sliding channel (26) opposite the face (14) of the partition of the part (12), with which the gripper (55) cooperates when the convex member is in the compressed condition, the lower edge (54) of the convex member bearing against a rim (56) formed at the free end of the fixing lug.

3. Fixing device according to Claim 1 or Claim 2, characterized in that the sleeve (60) can be compressed radially so that, during clamping, it can penetrate the hole (44) formed in the fixing lug (16) for the passage of the body of the screw (36).

## Patentansprüche

1. Vorrichtung zum Befestigen, durch eine Gewindeverbindung, eines Stückes (12) auf einem Träger (18), des Typs, der eine Befestigungsklammer (16) aufweist, die mit dem Stück (12, 14) verbunden ist, welches verschiebebeweglich in bezug auf das Stück (18) parallel zu der Einspannrichtung (D) angebracht ist, welche von einer Klemmschraube (36) durchquert wird, die in ein Gewinde (42) eingeschraubt ist, das mit dem Träger (18) verbunden ist, und welche mit einer Einrichtung (46) zum Verschiebeimmobilisieren in bezug auf das Stück (14) versehen ist, wenn die Klemmschraube (36) in der Klemmposition ist, dadurch gekennzeichnet, daß die Befestigungsklammer (16) einen Translations-Führungsansatz (24), welcher in einer Gleitschiene (26) aufgenommen ist, aufweist, die auf dem Stück (12, 14) gebildet ist und die einen Spalt (32) aufweist, der in einer Wand (28) dieser Gleitschiene angeordnet ist, zum Durchlaß und Gleiten der Befestigungsklammer (16), und daß die Klemmschraube (26) eine Hülse (60) zum Anziehen der Befestigungsklammer (16) aufweist, die mit der Fläche (49) dieser letzteren zusammenwirkt und deren Durchmesser kleiner ist als derjenige des Loches (58), das in dem bauchigen Teil (46) für den Durchlaß des Körpers (40) der Schraube (36) gebildet ist.

2. Befestigungsvorrichtung nach Anspruch 1, dadurch gekennzeichnet, daß die Immobilisiereinrichtung für die Befestigungsklammer (16) aus einem komprimierbaren, bauchigen Teil (46) gebildet sind, das an einer Fläche (49) der Klemme anliegt und von der Klemmschraube (36) durchquert wird, dessen oberer Rand (53), der wenigstens eine Klaue (55) aufweist, sich in das Innere der Gleitschiene (26) gegenüber der Fläche (14) der Zwischenwand des Stückes (12) erstreckt, mit der im komprimierten Zustand des bauchigen Teiles die Klaue (55) zusammenwirkt, und dessen unterer Rand (54) an einer Leiste (56) anliegt, die am freien Ende der Befestigungsklammer gebildet ist.

3. Befestigungsvorrichtung nach Anspruch 1 oder 2, dadurch gekennzeichnet, daß die Hülse (60) in radialer Richtung zusammendrückbar ist, um beim Einspannen ihr Eindringen in die Öffnung (44) zu ermöglichen, die in der Befestigungsklammer (16) für den Durchlaß des Körpers der Schraube (36) gebildet ist.
